# EUROPEAN PATENT SPECIFICATION

(11) **EP 2 172 605 B1**
(45) Date of publication and mention of the grant of the patent: **08.01.2014**
(21) Application number: 08791632.6
(22) Date of filing: 25.07.2008
(51) Int. Cl.: E05B 1/00, B60J 5/00, B60R 25/00, E05B 49/00

(54) **DOOR HANDLE DEVICE**
TÜRGRIFFVORRICHTUNG
DISPOSITIF DE POIGNÉE DE PORTIÈRE

(30) Priority: 27.07.2007 JP 2007196119
(43) Date of publication of application: 07.04.2010
(73) Proprietor: Aisin Seiki Kabushiki Kaisha, Kariya-shi, Aichi 448-8650 (JP); TOYOTA JIDOSHA KABUSHIKI KAISHA, Toyota-shi, Aichi-ken, 471-8571 (JP)
(72) Inventor: IEDA, Kiyokazu, Kariya-shi, Aichi-ken 448-8650 (JP); MUSHIAKE, Eiji, Kariya-shi, Aichi-ken 448-8650 (JP); TATEISHI, Masashi, Kariya-shi, Aichi-ken 448-8650 (JP); KAKEGAWA, Tomoo, Toyota-shi, Aichi-ken 471-8571 (JP); FUNAYAMA, Tomoyuki, Toyota-shi, Aichi-ken 471-8571 (JP); NISHIYAMA, Shigeki, Toyota-shi, Aichi-ken 471-8571 (JP)
(74) Representative: Kügele, Bernhard
(86) International application number: PCT/JP2008/063388
(87) International publication number: WO 2009/017048

(56) References cited:
- EP-A2- 1 788 661
- JP-A- 2002 057 564
- JP-A- 2002 295 094
- JP-A- 2003 221 949
- JP-A- 2004 169 426
- JP-A- 2007 142 784
- JP-A- 2007 247 219

## Description

### TECHNICAL FIELD

The present invention relates to a door handle device implementing a function for detecting a lock command or the like for a vehicle door.

### BACKGROUND ART

Nowadays, the so-called Smart Entry System (registered trademark) is used in door handle devices. In the Smart Entry System, communication is performed between a portable device, which is carried by a vehicle user, and a transceiver of a vehicle so as to, for example, recognize a vehicle user is approaching or leaving the vehicle and detect a lock command and an unlock command generated by the vehicle user to automatically lock and unlock the vehicle door. Patent Document 1 describes an example of such a conventional door handle device. Fig. 5 shows the front structure of the door handle device described in patent document 1. Fig. 6 shows the cross-sectional structure taken along line 6-6 in Fig. 5.

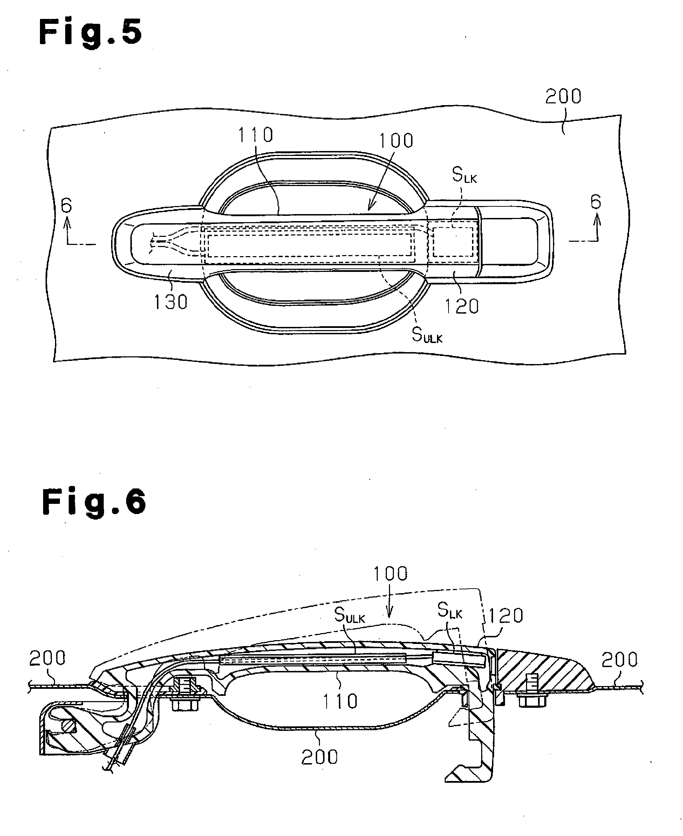

As shown in Figs. 5 and 6, the door handle device has a door handle 100 including an outer panel 200 of the vehicle door and a grip 110, which defines an area into which a vehicle user's hand is insertable. The grip 110 includes an unlock sensor S_{ULK}, which is for detecting an unlock command generated by the vehicle user. An operation unit, which is for operating an opening/closing mechanism of the vehicle door, extends into the door through the outer panel 200 from one end 120 of the door handle 100. The end 120 includes a lock sensor S_{LK}, which is for detecting a lock command generated by the vehicle user. The lock sensor S_{LK} and the unlock sensor S_{ULK} are each a capacitance sensor that detects changes in the capacitance and includes a detection electrode. The sensors S_{LK} and S_{ULK} each determine that the lock command or the unlock command has been issued when detecting a change in the capacitance that occurs when the vehicle user's hand approaches the corresponding detection electrode. For instance, when C_{PANEL} represents a reference value for the capacitance between the outer panel 200 of the vehicle door and the detection electrode of the lock sensor S_{LK}, it is determined that the lock command has not been issued if the value of the capacitance detected by the lock sensor S_{LK} does not greatly differ from the reference value C_{PANEL}. When the vehicle user's hand approaches the detection electrode, a new capacitance C_{T}, which is electrically connected in parallel to the capacitance C_{PANEL}, is formed between the detection electrode and the vehicle user's hand (synthesized capacitance C_{PANEL} + C_{T}). Since the value of the synthesized capacitance is greater than the reference value C_{PANEL} by an amount corresponding to the capacitance C_{T}, it is determined that a lock command has been issued. This detection principle is applied in the same manner to the unlock sensor S_{ULK}. In the door handle device of patent document 1, the lock sensor S_{LK} and the unlock sensor S_{ULK} are arranged at different parts of the door handle 100. The lock command and the unlock command are thus distinguished from each other by the vehicle user touching these different parts of the door handle 100.

As shown in Fig. 6, the door handle device of patent document 1 includes a lock detection electrode (lock sensor S_{LK}) arranged in an area (area facing away from the outer panel 200) of the end of the grip 110 closer to the outer surface. Thus, when the vehicle user inserts his or her hand between the grip 110 and the outer panel 200 to perform an unlock operation and pulls the door handle 100 to open the door, the hand is apt to enter the detection range of the lock sensor S_{LK}. In such a case, accurate detections may be hindered since the detection of the unlock command by the unlock sensor S_{ULK} and the detection of the lock command by the lock sensor S_{LK} are simultaneously performed. Further, when the door is open, the vehicle user may perform unintentional operations such as the lock operation if the vehicle user's hand enters the detection range of the lock sensor S_{LK}.
[Patent Document 1] Japanese Patent No. 3502848

EP 1788 661 and JP 2004 169426 disclose conventional door handle devices as defined by the preamble of claim 1.

### DISCLOSURE OF THE INVENTION

It is an object of the present invention to provide a door handle device that avoids unintentional operations when the vehicle user locks the door.

To achieve the above object, the present invention provides a door handle device as defined in the claims.

### BRIEF DESCRIPTION OF THE DRAWINGS

Fig. 1 is a cross-sectional view of a door handle device according to one embodiment of the present invention;
Fig. 2 is a perspective view showing an exploded structure of a portion from a first end to a grip of the door handle device of Fig. 1;
Fig. 3 is a block diagram mainly showing the structure of a door lock system in the door handle device of Fig. 1;
Fig. 4 is a cross-sectional view taken along line 4-4 in Fig. 1;
Fig. 5 is a front view showing a conventional door handle device; and
Fig. 6 is a cross-sectional view taken along line 6-6 in Fig. 5.

### BEST MODE FOR CARRYING OUT THE INVENTION

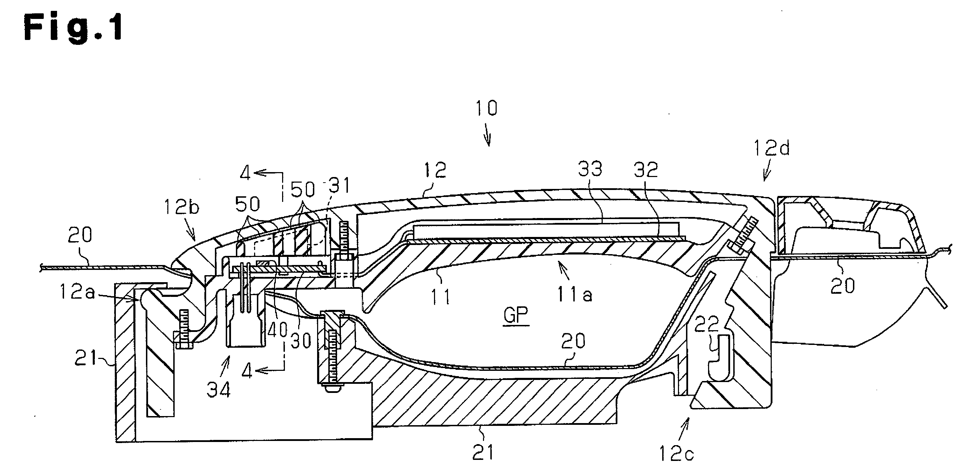

One embodiment of a door handle device according to the present invention implementing the Smart Entry System (registered trademark) will now be discussed with reference to Figs. 1 to 4.

As shown in Fig. 1, a door handle device, which is capable of operating a door opening/closing mechanism of a vehicle, has a door handle 10 including a case, which is formed by a first handle case 11 and a second handle case 12. The first handle case 11 includes a grip 11a, which is gripped by a vehicle user. A gap GP is defined between the grip 11a and an outer surface of an outer panel 20 of the vehicle door. The second handle case 12 is fastened to the first handle case 11 by screws or the like to cover the first handle case 11 and form an outer portion of the door handle 10. In this manner, the case of the door handle 10 is formed by two segments (11 and 12). Thus, the door handle 10 has a high degree of freedom and convenience for design and manufacturing. The first handle case 11 and the second handle case 12 are both formed from a highly rigid resin material.

A support member 21 and a lever 22 of the door opening/closing mechanism are arranged in the outer panel 20. The second handle case 12 includes a first end 12b, which serves as a first portion, and a second end 12d, which serves as a second portion located opposite to the first end 12b with the grip 11 a arranged in between. The support member 21 pivotally supports a pivot portion 12a, which extends from the first end 12b through the outer panel 20 and into the interior of the outer panel 20. An operation portion 12c, which is for operating the lever 22, extends from the second end 12d through the outer panel 20 and into the interior of the outer panel 20. When the vehicle user holds the grip 11a and pulls the door handle 10, the door handle 10 pivots about the first end 12b in a direction that moves out the second end 12d. This operates the lever 22 with the operation portion 12c and opens the vehicle door as long as the vehicle door is not in a locked state.

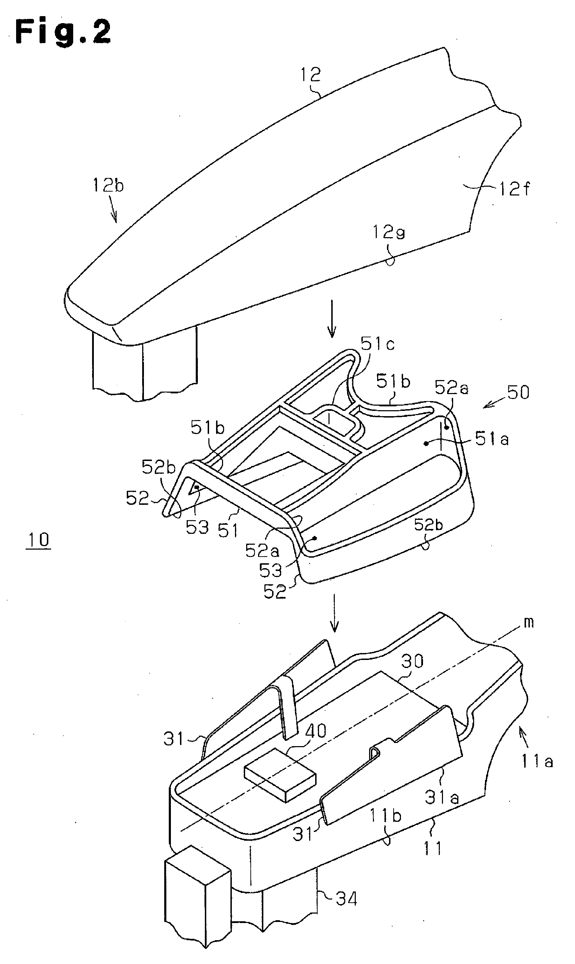

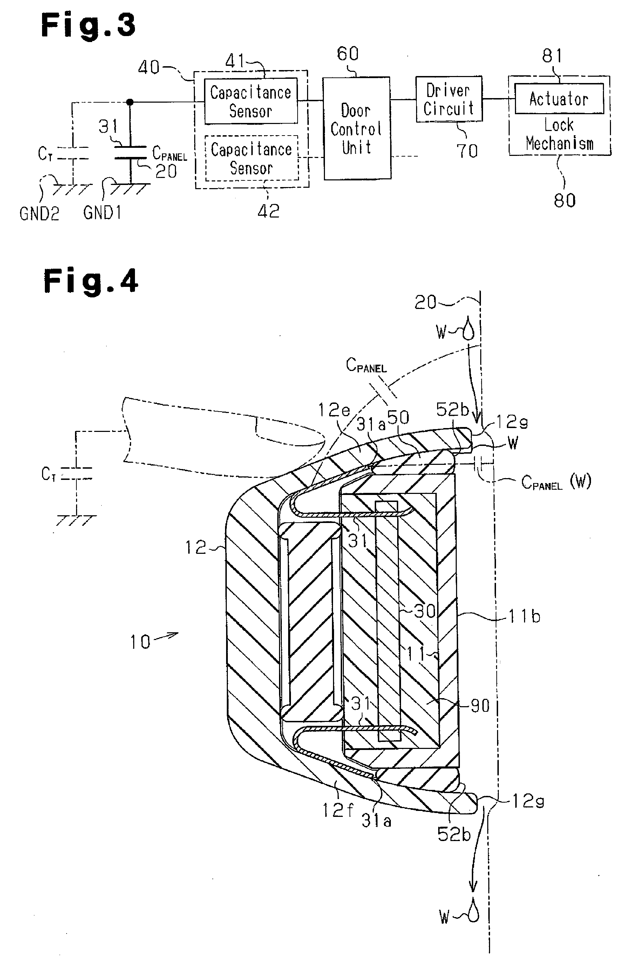

In the first handle case 11, a circuit substrate 30, on which various types of electronic components are mounted, is arranged between the grip 11a and the first end 12b. Referring to Fig. 4, the interior of the handle case 11 is filled with a flexible resin 90 (e.g., polyurethane, silicon etc.) so that the circuit substrate 30 is fixed to the case 11 and kept impervious to water due to the resin 90. The resin 90 is shown only in Fig. 4. A pair of lock detection electrodes 31 is mounted on the circuit substrate 30. The lock detection electrodes 31 are connected to a capacitance sensor 41, which detects the issuance of a door lock command of the vehicle door based on changes in the capacitance. As shown in Figs. 2 and 4, each lock detection electrode 31 faces the inner surface of the second handle case 12, more specifically, the inner surfaces of the upper and lower walls 12e and 12f of the second handle case 12 and is arranged between the grip 11a and the first end 12b. The upward and downward directions as viewed in Fig. 4 correspond to the upward and downward directions of the vehicle. In the present embodiment, the lock detection electrodes 31 are located proximate to, or in contact with, the inner surfaces of the upper and lower walls 12e and 12f, respectively. A capacitance sensor 42 has an unlock detection electrode 32 electrically connected to a specific electrode that serves as a sensor input terminal arranged on the circuit substrate 30. The unlock detection electrode 32 detects the issuance of a door unlock command of the vehicle door based on changes in the capacitance. The unlock detection electrode 32 is arranged in the grip 11a. An antenna 33 is arranged in the grip 11a. Necessary information such as user authentication is exchanged between the antenna 33 and a portable device (not shown), which is carried by the vehicle user. The antenna 33 is electrically connected to a specific electrode that serves as a power supply terminal arranged on the circuit substrate 30. A sensor IC 40 including the capacitance sensors 41 and 42 is mounted on the circuit substrate 30. The supply of power to the sensor IC 40, the antenna 33, and the like, and the retrieval of the necessary information, such as output signals from the sensor IC 40, by a door control unit 60 (see Fig. 3) are performed through a connector 34, which is arranged on the rear surface of the circuit substrate 30.

An elastic body 50, which is waterproof and formed from rubber, elastomer, or the like, encompasses the two lock detection electrodes 31. The elastic body 50 is fitted to the outer surface of the first handle case 11 or the inner surface of the second handle case 12. Fig. 2 shows in detail the structure of the elastic body 50 and its surroundings.

As shown in Fig. 2, the lock detection electrodes 31 are arranged in symmetry with respect to a center line m extending in the longitudinal direction of the door handle 10 from the first end 12b towards the second end 12d along the middle of the space between the upper and lower walls 12e and 12f. The elastic body 50 is arranged along the contour of the lock detection electrodes 31. More specifically, the elastic body 50 includes a first portion 51, which is arranged between the circuit substrate 30 and the inner surface of the second handle case 12, and two second portions 52, which extend from the first portion 51 between the first and second handle cases 11 and 12 along the contour of the lock detection electrodes 31. The elastic body 50 is arranged in symmetry with respect to the center line m. An opening 53 is formed between the first portion 51 and each second portion 52. When mounting the elastic body 50, the lock detection electrodes 31 are inserted into the corresponding one of the openings 53. As a result, each lock detection electrode 31 is encompassed by a first outer wall 51a of the first portion 51 and an inner wall 52a of the second portion 52. The first portion 51 includes an outer rim 51b and an inner rim 51c. When the door handle 10 is assembled, the upper surface of the elastic body 50 as viewed in Fig. 2 is in contact with the inner surface of the second handle case 12. Further, the second portion 52 is held between the opposing surfaces of the first handle case 11 and the second handle case 12 (refer to Fig. 4). The lock detection electrodes 31 each have an electrode end 31a, which is located in a clearance formed between the first and second handle cases 11 and 12 facing toward the outer panel 20. In the space between the electrode end 31a and the outer panel 20, the second portions 52 seal the clearance between the first and second handle cases 11 and 12. The second portions 52 each have an outer panel side end 52b, which is flush with an outer panel side end 11b of the first handle case 11 and an outer panel side end 12g of the second handle case 12. In this manner, the elastic body 50 seals the clearance between the first and second handle cases 11 and 12 near the lock detection electrodes 31.

Fig. 3 is an equivalent circuit mainly showing a door lock system in the door handle device and illustrated as a block diagram. The detection principle of the door lock and operational procedures related to the door lock will now be discussed with reference to Fig. 3.

In Fig. 3, ground GND1 represents the outer panel 20. As shown in Fig. 3, the outer panel 20 and the lock detection electrodes 31 are capacitance-coupled to form a capacitance C_{PANEL} therebetween. The capacitance sensor 41 retrieves the value of the capacitance C_{PANEL} via the lock detection electrodes 31. The vehicle user may touch with his or her hand a portion of the second handle case 12 facing the lock detection electrodes 31. In Fig. 3, ground GND2 represents the vehicle user. In this case, the vehicle user and the lock detection electrode 31 are capacitance-coupled so as to form a capacitance C_{T} in between. The capacitance C_{T} and the capacitance C_{PANEL} are in an electrically parallel relationship. The capacitance sensor 41 retrieves the value indicating the synthesized capacitance (C_{PANEL} + C_{T}). The capacitance sensor 41 detects issuance of the door lock command when the value of the synthesized capacitance is greater than the capacitance C_{PANEL} by an amount corresponding to the capacitance C_{T}. As a result, the door control unit 60 determines that a door lock command has been issued by the vehicle user based on the detection signal of the capacitance sensor 41. The door control unit 60 then drives a lock actuator 81 arranged in a lock mechanism 80 via a driver circuit 70 to lock the vehicle door. The same detection principle and operational procedures are applied to an unlock system that unlocks the vehicle door through cooperation between the unlock detection electrode 32 and the capacitance sensor 42. As described above, the lock detection electrodes 31 are arranged facing toward the inner surfaces of the upper and lower walls 12e and 12f of the second handle case 12. This solves the problem of the door lock command being issued when the vehicle user performs door handle gripping in a normal manner. Thus, erroneous door lock operations performed by the vehicle user are prevented.

The significance of the arrangement of the elastic body 50 in the door handle device will now be discussed. Referring to Fig. 4, a portion between the first end 12b and the grip 11a corresponds to a pivotal basal end of the door handle 10. Thus, the clearance between this portion and the outer panel 20 is small. As a result, during a rainfall or the like, raindrops W are apt to enter the space between the outer panel and the first and second handle cases 11 and 12. In addition, the case of the door handle 10 is divided into the two handle cases 11 and 12. Thus, such raindrops W may enter the inner side of the second handle case 12, and the ingressive raindrops W may move to the proximity of or come into contact with the lock detection electrode 31. When the raindrops W move to the proximity of or come into contact with the lock detection electrodes 31, as the permittivity of a dielectric rises, the capacitance increases by an amount corresponding to a capacitance C_{PANEL}(W) especially at closest opposing portions of the capacitance-coupled detection electrode 31 and outer panel 20 at which the distance between the two is the shortest. This increases the influence of the increased capacitance C_{PANEL}(W) on the capacitance C_{PANEL} between the detection electrode 31 and the outer panel 20. In this case, the capacitance sensor 41 may function erroneously as if a door lock command has been issued.

In the door hand device of the present embodiment, the waterproof elastic body 50 encompasses the lock detection electrodes 31. Referring to Fig. 4, this ensures that the ingress of raindrops W into the second handle case 12 is stopped. This prevents the permittivity from increasing and consequently the capacitance C_{PANEL}(W) from increasing at closest opposing portions of the capacitance-coupled detection electrode 31 and outer panel 20. Thus, erroneous operations of the capacitance sensors 41 and 42 caused by such ingressive raindrops W are suppressed in a desirable manner. Additionally, in the present embodiment, the elastic body 50 seals the clearance between the first and second handle cases 11 and 12 at least near the lock detection electrodes 31. This avoids the ingression and collection of raindrops W near the lock detection electrodes 31 and further ensures that erroneous operations of the capacitance sensor 41 are suppressed.

The door handle device of the present embodiment has the advantages described below.
(1) The lock detection electrodes 31 are arranged on the inner surfaces of the upper and lower walls 12e and 12f in the second handle case 12. This solves the problem of the door lock command being issued when the vehicle user performs normal door handle gripping. Further, the waterproof elastic body 50 encompasses the lock detection electrodes 31. This avoids the ingression of raindrops W into the second handle case 12 and the ingressive raindrops W thereby do not move to the proximity of or come into contact with the lock detection electrodes 31. Thus, the permittivity and consequently the capacitance C_{PANEL}(W) do not increase at the closest opposing portions of the capacitance-coupled detection electrode 31 and outer panel 20 that would be caused by the ingression of raindrops W. As a result, erroneous operations of the capacitance sensor 41 are suppressed in a desirable manner.
(2) The portion of the elastic body 50 encompassing the lock detection electrodes 31 is held between the first and second handle cases 11 and 12. This seals the clearance between the first and second handle cases 11 and 12 near the lock detection electrodes 31 and avoids the ingression of raindrops W near the lock detection electrodes 31. Thus, erroneous operations of the capacitance sensors that would be caused by raindrops are suppressed. Advantages (1) and (2) are not limited to when there are raindrops W, which result from a rainfall, but are also obtained when there are, for example, water droplets or the like resulting from a car wash or the like.
(3) The two lock detection electrodes 31 are arranged in symmetry with respect to the center line m, which extends from the first end 12b to the second end 12d. The elastic body 50, which encompasses the lock detection electrodes 31, are also arranged in symmetry with respect to the center line m. In other words, the two lock detection electrodes 31 are arranged to be symmetric in the vertical direction when the door handle is attached to the vehicle door. This normalizes the door handle device and allows for versatile use. Specifically, the door handle device is versatile and basically has the same structure regardless of whether it is used for any door of a vehicle, such as the right door, the left door, and the rear doors.
(4) The waterproof elastic body 50 uses rubber or elastomer, which are versatile packing materials. This easily obtains the above-described waterproof structure.
(5) The unlock detection electrode 32 of the vehicle door is arranged in the grip 11a of the door handle. Thus, the door unlock command is issued when the vehicle user holds and operates the door handle to open the vehicle door. This distinguishes a door lock command from a door unlock command in a desirable manner. In other words, the capacitance sensor 41 and 42 more accurately detect whether the vehicle user intends to lock or unlock the vehicle door.
(6) The outer panel side end 52b of the second portion 52 is preferably flush with the outer panel side end 11 b of the first handle case 11 or the outer panel side end 12g of the second handle case 12. This seals the clearance between the first and second handle cases 11 and 12 with the elastic body 50 near the lock detection electrodes 31.

The above-described embodiment may also be modified and practiced as discussed below.

In the above-described embodiment, rubber or elastomer is used for the elastic body 50. However, other resin materials may also be used as required as long as a waterproof elastic body is obtained.

In the above-described embodiment, the elastic body 50 seals the clearance between the first and second handle cases 11 and 12 at least near the lock detection electrodes 31. If the door handle has a structure that prevents the collection of raindrops or the like, the same advantages as the above-described embodiment may be obtained just by encompassing the lock detection electrodes 31 with an elastic body.

The lock detection electrodes 31 do not necessarily have to be arranged in vertical symmetry. For exemple, if the lock detection electrode is a single electrode, the lock detection electrode may be arranged at a position facing toward the inner surface of either the upper wall or the lower wall of the door handle in a state in which the door handle is attached to the vehicle as long as it is arranged between the grip and the first end of the door handle.

In the above-described embodiment, the first end 12b and the second end 12d are arranged in the second handle case 12. Instead, at least either one of the first end 12b and the second end 12d may be arranged in the first handle case 11.

In the above-described embodiment, the elastic body 50 may be attached to the first handle case 11 or the second handle case 12 by an adhesive.

## Claims

1. A door handle device arranged in a door of a vehicle and capable of operating a door opening/closing mechanism of the vehicle, the door handle device comprising:
a first handle case (11), which has a grip (11a) arranged to define a gap with an outer surface of an outer panel (20) of a vehicle door;
a second handle case (12), which is attached to the first handle case (11) to cover the first handle case (11);
a lock detection electrode (31) arranged between the first handle case (11) and the second handle case (12) and capacitance-coupled to the outer panel (20) so as to allow for detection of a door lock command based on a change in a capacitance formed with the outer panel (20), with the lock detection electrode (31) including an electrode end (31 a) facing toward the outer panel (20);
a circuit substrate (30) arranged in the first handle case (11); and
a waterproof elastic body (50) covering the electrode end (31 a),
**characterized in that** the elastic body (50) includes a first portion (51), which is arranged between the circuit substrate (30) and an inner surface of the second handle case (12), a second portion (52), which extends from the first portion (51) along the contour of the lock detection electrode (31) and an opening (53) between the first portion (51) and the second portion (52), with the lock detection electrode (31) being arranged in the opening (53).

2. The door handle device according to claim 1, wherein the electrode end (31 a) is located in a clearance formed between the first handle case (11) and the second handle case (12), and the elastic body (50) is arranged to seal the clearance between the electrode end (31 a) and the outer panel (20).

3. The door handle device according to claim 1 or 2, wherein the elastic body (50) is fitted to the first handle case (11) or the second handle case (12).

4. The door handle device according to claim 1 or 2, wherein the elastic body (50) is adhered to the first handle case (11) or the second handle case (12).

5. The door handle device according to any one of claims 1 to 4, wherein the elastic body (50) is formed from rubber or elastomer.

## Patentansprüche

1. Türdrückervorrichtung, die in einer Tür eines Fahrzeugs angeordnet ist und in der Lage ist, einen Türöffnungs-/Schließmechanismus des Fahrzeugs zu bedienen, wobei die Türdrückervorrichtung Folgendes umfasst:
ein erstes Drückergehäuse (11), das einen Griff (11a) aufweist, der angeordnet ist, um eine Lücke mit einer Außenfläche eines Außenblechs (20) einer Fahrzeugtür abzugrenzen;
ein zweites Drückergehäuse (12), das an dem ersten Drückergehäuse (11) befestigt ist, um das erste Drückergehäuse (11) abzudecken;
eine Verriegelungserkennungselektrode (31), die zwischen dem ersten Drückergehäuse (11) und dem zweiten Drückergehäuse (12) angeordnet ist und kapazitiv an das Außenblech (20) gekoppelt ist, um die Feststellung eines Türverriegelungsbefehls auf der Grundlage einer Änderung einer Kapazität zu ermöglichen, die mit dem Außenblech (20) gebildet wird, wobei die Verriegelungserkennungselektrode (31) ein Elektrodenende (31a) umfasst, das dem Außenblech (20) zugewandt ist;
ein Schaltungssubstrat (30), das in dem ersten Drückergehäuse (11) angeordnet ist; und
einen wasserdichten elastischen Körper (50), der das Elektrodenende (31a) abdeckt;
**dadurch gekennzeichnet, dass** der elastische Körper (50) einen ersten Abschnitt (51), der zwischen dem Schaltungssubstrat (30) und einer Innenfläche des zweiten Drückergehäuses (12) angeordnet ist, einen zweiten Abschnitt (52), der sich von dem ersten Abschnitt (51) entlang des Umrisses der Verriegelungserkennungselektrode (31) erstreckt, und eine Öffnung (53) zwischen dem ersten Abschnitt (51) und dem zweiten Abschnitt (52) umfasst, wobei die Verriegelungserkennungselektrode (31) in der Öffnung (53) angeordnet ist.

2. Türdrückervorrichtung nach Anspruch 1, wobei das Elektrodenende (31a) sich in einem Zwischenraum befindet, der zwischen dem ersten Drückergehäuse (11) und dem zweiten Drückergehäuse (12) gebildet ist, und der elastische Körper (50) angeordnet ist, um den Zwischenraum zwischen dem Elektrodenende (31a) und dem Außenblech (20) abzudichten.

3. Türdrückervorrichtung nach Anspruch 1 oder 2, wobei der elastische Körper (50) auf das erste Drückergehäuse (11) oder das zweite Drückergehäuse (12) aufgesetzt ist.

4. Türdrückervorrichtung nach Anspruch 1 oder 2, wobei der elastische Körper (50) an dem ersten Drückergehäuse (11) oder dem zweiten Drückergehäuse (12) haftet.

5. Türdrückervorrichtung nach einem der Ansprüche 1 bis 4, wobei der elastische Körper (50) aus Gummi oder Elastomer gebildet ist.

## Revendications

1. Dispositif de poignée de porte disposé dans une porte d'un véhicule et capable d'actionner un mécanisme d'ouverture/fermeture de porte du véhicule, le dispositif de poignée de porte comprenant :
un premier boîtier de poignée (11), qui a un élément de prise (11a) agencé pour définir un espace avec une surface extérieure d'un panneau extérieur (20) d'une porte de véhicule ;
un deuxième boîtier de poignée (12), qui est fixé au premier boîtier de poignée (11) pour couvrir le premier boîtier de poignée (11) ;
une électrode de détection de verrouillage (31) disposée entre le premier boîtier de poignée (11) et le deuxième boîtier de poignée (12) et couplée par l'intermédiaire d'un condensateur au panneau extérieur (20) de manière à permettre la détection d'une commande de verrouillage de porte sur la base d'une variation de la capacité formée avec le panneau extérieur (20), avec l'électrode de détection de verrouillage (31) comportant une extrémité d'électrode (31a) faisant face au panneau extérieur (20) ;
un substrat de circuit (30) disposé dans le premier boîtier de poignée (11) ; et
un corps élastique imperméable (50) couvrant l'extrémité d'électrode (31a),
**caractérisé en ce que** le corps élastique (50) comporte une première partie (51), qui est disposée entre le substrat de circuit (30) et une surface intérieure du deuxième boîtier de poignée (12), une deuxième partie (52), qui s'étend à partir de la première partie (51) le long du contour de l'électrode de détection de verrouillage (31) et une ouverture (53) entre la première partie (51) et la deuxième partie (52), avec l'électrode de détection de verrouillage (31) étant disposée dans l'ouverture (53).

2. Dispositif de poignée de porte selon la revendication 1, dans lequel l'extrémité d'électrode (31a) est située dans un jeu formé entre le premier boîtier de poignée (11) et le deuxième boîtier de poignée (12), et le corps élastique (50) est agencé pour sceller le jeu entre l'extrémité d'électrode (31a) et le panneau extérieur (20).

3. Dispositif de poignée de porte selon la revendication 1 ou 2, dans lequel le corps élastique (50) est ajusté au premier boîtier de poignée (11) ou au deuxième boîtier de poignée (12).

4. Dispositif de poignée de porte selon la revendication 1 ou 2, dans lequel le corps élastique (50) est collé au premier boîtier de poignée (11) ou au deuxième boîtier de poignée (12).

5. Dispositif de poignée de porte selon l'une quelconque des revendications 1 à 4, dans lequel le corps élastique (50) est fabriqué en caoutchouc ou en élastomère.
